# EUROPÄISCHE PATENTSCHRIFT

(11) **EP 1 157 962 B1**
(45) Veröffentlichungstag und Bekanntmachung des Hinweises auf die Patenterteilung: **04.02.2004**
(21) Anmeldenummer: 01111538.3
(22) Anmeldetag: 11.05.2001
(51) Int. Cl.: B66F 3/10, F16H 57/04, F16N 11/08

(54) **Spindelantrieb mit Fördereinrichtung für den Schmierstoff**
Spindle drive unit with feed device for the lubricant
Ensemble de levage à vis avec un dispositif de transport pour le lubrifiant

(30) Priorität: 12.05.2000 DE 10023215
(43) Veröffentlichungstag der Anmeldung: 28.11.2001
(73) Patentinhaber: A. Römheld GmbH & Co KG, 35321 Laubach (DE)
(72) Erfinder: Oechler, Martin D., 36355 Grebenhain (DE)
(74) Vertreter: von Ahsen, Erwin-Detlef

(56) Entgegenhaltungen:
- EP-A- 0 594 378
- DE-A- 2 844 436
- DE-A- 3 910 814
- US-A- 2 153 888

## Beschreibung

Die Erfindung bezieht sich auf einen Spindelantrieb mit Fördereinrichtung für den Schmierstoff des Spindelantriebs, der mit einem Bewegungsgewinde versehen ist und hohen Umfangsgeschwindigkeiten und großen Belastungen ausgesetzt ist.

Spindelantriebe werden unter anderem zur Übertragung großer Kräfte eingesetzt, z.B. in den Antrieben der Hubeinrichtungen von Hebebühnen. Die Spindeln sind hier mit einem Bewegungsgewinde versehen und werden mit großen Umfangsgeschwindigkeiten betrieben. Somit unterliegen sie nicht nur den Anforderungen einer exakten Kraftübertragung, sondern müssen auch leichtgängig sein. Das bedingt, daß die Spindelantriebe ständig geschmiert werden müssen, um die Reibungskräfte innerhalb der Bewegungsgewinde so gering wie möglich zu halten.

In der Praxis hat sich jedoch gezeigt, daß bei hohen Umfangsgeschwindigkeiten und stärkerer Belastung die Schmierung lückenhaft ist. Ein Teil der Bewegungsgewinde bleibt ungeschmiert. Mit zunehmenden Arbeitseinsatz treten unangenehme Geräusche auf und die Bewegungsgewinde sind verstärkten Verschleißerscheinungen ausgesetzt. Das führt dazu, daß die Spindelantriebe frühzeitig überholt werden müssen. Dieser Nachteil kann auch dazu führen, daß Spindelantriebe mehrfach zur Verfügung stehen müssen, um ein schnelles Auswechseln zu gewährleisten, damit der Arbeitsvorgang der Hebebühnen nicht für längere Zeit unterbrochen werden muß.

Ein Spindelantrieb gemäß dem Oberbegriff des Anspruches 1 wird z.B. in DE-A- 3 910 814 gezeigt.

Der Erfindung liegt somit die Aufgabe zugrunde, den Spindelantrieb mit zusätzlichen Maßnahmen zu versehen, durch die eine exakte Schmierung der Spindel über den gesamten Bereich ihrer Bewegungsgewinde gewährleistet ist.

Die Lösung der Aufgabe ist den kennzeichnenden Merkmalen der Ansprüche zu entnehmen.

Die Erfindung ist anhand der Zeichnungen näher erläutert.
- Fig. 1: zeigt eine Hebebühne mit zwei Hubeinrichtungen
- Fig.2: zeigt einen Spindelantrieb im Längsschnitt

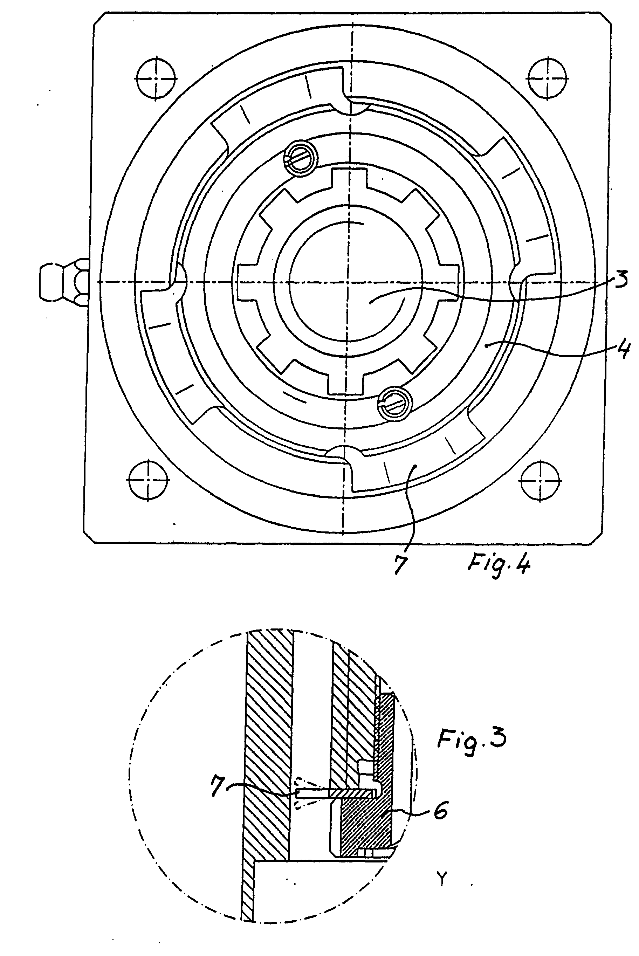

- Fig. 3: zeigt die Anordnung der Fördereinrichtung im Ausschnitt Y
- Fig. 4: zeigt die Spindel im Querschnitt

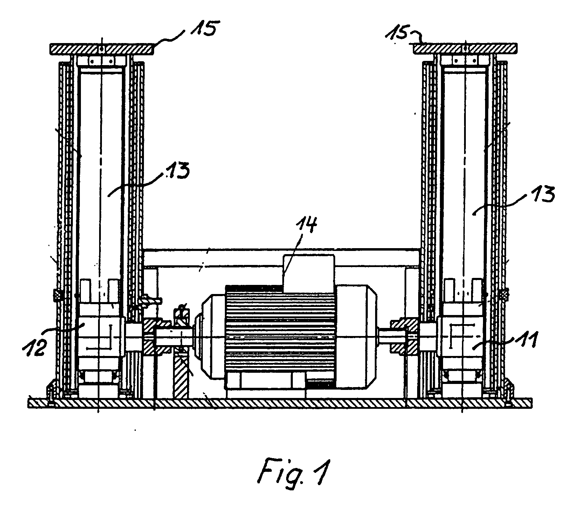

In Fig. 1 ist eine Hebebühne dargestellt, die mit zwei Hubeinrichtungen 11 und 12 versehen ist. Im Innern der Hubantriebe 11 und 12 ist je ein Spindelantrieb 13 zum Heben und Senken der Bühnen 15 angeordnet. Die Spindeln 13 werden von einem Antriebsmotor 14, der zwischen den beiden Hubeinrichtungen 11 und 12 angeordnet ist, angesteuert. Solche Hebebühnen können grosse Lasten aufnehmen und halten.

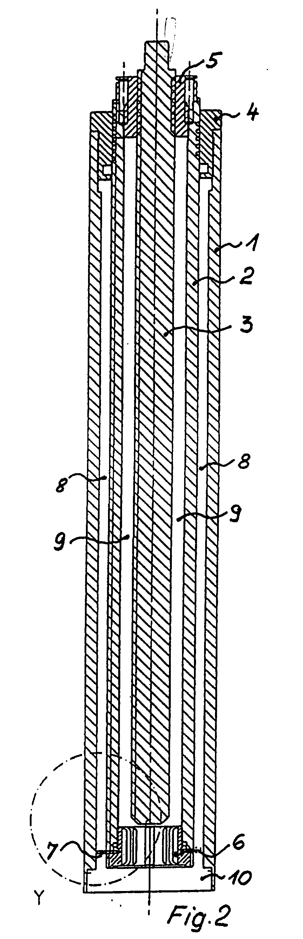

Der in den Hubeinrichtungen 11 und 12 integrierte Spindelantrieb 13 ist in Fig. 2 gezeigt. Der Spindelantrieb 13 wird von zwei ineinander liegenden Spindeln betrieben, deren Gänge gegenläufig sind. Dadurch wird es möglich einen grossen Hub zu fahren. Von den beiden Spindeln ist die äussere als Schubrohrspindel 2 und die Innere als Stabspindel 3 ausgeführt. Jede der beiden Spindeln fährt somit die Hälfte des gesamten Hubes aus, wobei die Stabspindel 3 gegenüber der Schubrohrspindel 2 den doppelten Weg zurücklegt. Durch die unterschiedlichen Durchmesser der Spindeln unterliegen die Spindeln auch unterschiedlichen Umfangsgeschwindigkeiten. Die Umfangsgeschwindigkeit der Stabspindel 3 ist kleiner als die der Schubrohrspindel 2.

Der Spindelantrieb 13 ist mit einem Aussenrohr 1 umgeben, das den Spindelantrieb nach aussen abdichtet. In diesem Aussenrohr 1 sind neben den Spindeln auch deren Spindelmuttern und die Antriebskupplung untergebracht. In dem unteren Teil des Aussenrohres 1 ist die Antriebskupplung 6 angeordnet, die vom Antriebsmotor 14 angetrieben wird. Die Antriebskupplung 6 ist mit einer Keilwelle ( nicht näher dargestellt ) versehen, die mit der Schubrohrspindel 2 verbunden ist. Die Schubrohrspindel 2 ist geführt in einer Schubrohrspindelmutter 4, die ihrerseits fest im oberen Teil des Aussenrohres 1 angeordnet ist. Wird die Schubrohrspindel 2 über die Antriebskupplung 6 und deren Keilwelle angetrieben, so dreht sie sich in der Schubrohrspindelmutter 4 heraus. So wie die Schubrohrspindel 2 heraus gefahren wird, wird auch die Stabspindel 3 mitgenommen, die ihrerseits durch eine feste Ankoppelung an die Keilwelle gedreht wird. Die Stabspindel 3 ist in der Stabspindelmutter 5 geführt. Diese Stabspindelmutter 5 ist im oberen Teil der Schubrohrspindel 2 befestigt, so daß beide Spindeln eine Relativbewegung zu einander ausführen.

Diese voneinander abhängigen Bewegungsabläufe bedingen neben einer exakten Führung auch eine exakte Schmierung. Zur Schmierung dient ein Schmierstoff, der in dem äusseren Schmierraum 8 und in dem inneren Schmierraum 9 wirksam ist. Dieser Schmierstoff ist so bemessen, daß er im eingefahrenen Zustand der Spindeln diese nahezu über ihre Länge benetzt. Die ausfahrenden Spindeln sollen von diesem Schmierstoff soviel mitnehmen, daß sie innen auf ihren Gleitflächen benetzt bleiben und leicht in ihren Spindelmuttern gleiten. Diese ist jedoch nicht der Regelfall. Gerade bei grösseren Geschwindigkeiten reißt der Schmierfilm ab und die Spindeln laufen trocken. Nur durch eine zusätzliche Fördereinrichtung für den Schmierstoff kann diese verhindert werden indem diese für eine gleichmässige Schmierung sorgt.

Diese Fördereinrichtung besteht aus einem Flügelrad 7, das am unteren Ende der Schubrohrspindel 2 fest angebracht ist. Die Grösse des Flügelrades 7 ist so bemessen, das es den Querschnitt des äusseren Schmierraums 8 abdeckt und an der Innenwand des Aussenrohres 1 reibungslos vorbeigleitet. Die Flügel des Flügelrades sind so geformt, daß durch die Drehung des Flügelrades der Schmierstoff auf- bzw. ab geführt wird, je nach Drehrichtung. Das Flügelrad 7 bildet mit der Keilwelle der Antriebskupplung 6 und mit der Schubrohrspindel 2 eine Einheit.

Wird das System ausgefahren und werden die Spindeln 2 in Drehung versetzt, so dreht sich das Flügelrad mit und drückt infolge der Formgebung seiner Flügel den Schmierstoff nach oben in Richtung der Spindelmutter 4. Damit ist deren Schmierung gewährleistet. Wird das System eingefahren und die Spindeln abwärts gedreht, so wird ebenfalls durch die Formgebung der Flügel des Flügelrades 7 der Schmierstoff nach unten gedrückt, und zwar nach unten in den Schmierraum 8. Unterhalb des Schmierraumes 8 befindet sich ein Spindelhohlraum 10, in den der Schmierstoff nunmehr fliesst. Dieser Spindelhohlraum 10 ist ebenfalls mit dem inneren Schmierraum 9 verbunden, so daß der Schmierstoff nunmehr in den Schmierraum 9 gelangt und so für die Schmierung der Stabspindel 3 sorgt. Damit entsteht eine Doppelwirkung der Schmierung, die von der Drehrichtung abhängig ist.

Der Vorteil liegt darin, daß der Schmierstoff durch das Flügelrad in Fluss gehalten wird und einmal in den äusseren Schmierraum 8 und danach in den inneren Schmierraum 9 gedrückt wird.

## Patentansprüche

1. Spindelantrieb mit zwei ineinander liegenden Spindeln, die hohen Umfangsgeschwindigkeiten und hohen Belastungen ausgesetzt sind, wobei die äußere der beiden Spindeln als Schubrohr spindel (2) ausgeführt und von einem Außenrohr (1) umgeben ist und wobei zwischen der Schubrohrspindel (2) und dem Außenrohr (1) ein äußerer Schmierraum (8) gebildet ist, **dadurch gekennzeichnet, dass** der Spindelantrieb eine Fördereinrichtung für den Schmierstoff des Spindelantriebs umfasst, die aus einem Flügelrad (7) besteht, das unmittelbar mit der äußeren Schubrohrspindel (2) verbunden ist und innerhalb des zwischen Schubrohrspindel (2) und Außenrohr (1) gebildeten äußeren Schmierraums (8) wirksam ist, und wobei dessen Flügel so geformt sind, dass sie in beiden Drehrichtungen wirksam sind und somit den Schmierstoff im äußeren Schmierraum (8) je nach Drehrichtung der Schubrohrspindel (2) in unterschiedliche Richtungen fördert.

2. Spindelantrieb nach Anspruch 1, **dadurch gekennzeichnet, daß** der äussere Schmierraum (8) unten in einen Spindelhohlraum (10) endet und daß der Spindelhohlraum (10) mit einem inneren Schmierraum (9) verbunden ist

3. Spindelantrieb nach Anspruch 1 und 2, **dadurch gekennzeichnet, daß** der Schmierstoff beim Ausfahren der Schubrohrspindel (2) durch die Formgebung des Flügelrades (7) nach oben in Richtung Schubspindelmutter (4) gedrückt wird.

4. Spindelantrieb nach Anspruch 1 und 2, **dadurch gekennzeichnet, daß** der Schmierstoff beim Einfahren der Schubrohrspindel (2) durch die Formgebung des Flügelrades (7) nach unten in den Spindelhohlraum (10) gedrückt und von hier in den inneren Schmierraum (9) gepresst wird.

## Claims

1. Spindle-drive system with two spindles disposed in each other and exposed to high peripheral speeds and high loads, with the outer one of said two spindles being configured as torque-tube spindle (2) and surrounded by an external tube (1) and with a lubrication space (8) being formed between said torque-tube spindle (2) and said external tube (1), **characterised in that** the spindle-drive system comprises a conveyor means for conveying the lubricant of the spindle-drive system, which consists of an impeller (7) and is connected directly to said outside torque-tube spindle (2) and is operative within the external lubrication space (8) formed between said torque-tube spindle (2) and said external tube (1), with the vanes of said impeller being shaped in such a way that they are operative in both directions of rotation and hence convey the lubricant in the external lubrication space (8) in different directions, depending on the sense of rotation of said torque-tube spindle (2).

2. Spindle-drive system according to Claim 1, **characterised in that** said external lubrication space (8) terminates, at its bottom, in a spindle cavity (10) and that said spindle cavity (10) is connected to an internal lubrication space (9).

3. Spindle-drive system according to Claims 1 and 2, **characterised in that** when said torque-tube spindle (2) is extended, the lubricant is pressed in an upward direction towards the torque-tube spindle nut (4) due to the shape of said impeller (7).

4. Spindle-drive system according to Claims 1 and 2, **characterised in that** when said torque-tube spindle (2) is retracted, the lubricant is pressed downward into said spindle cavity (10) and from there into said internal lubrication space (9) due to the shape of said impeller (7).

## Revendications

1. Système de commande des broches à deux broches disposées l'une dans l'autre et exposées aux grandes vitesses circonférentielles et aux grandes charges, à la broche extérieure desdites deux broches étant configurée sous forme d'une broche à arbre de transmission (2) et étant entourée par un tube extérieur (1), et à un volume de lubrification (8) étant formé entre ladite broche à arbre de transmission (2) et ledit tube extérieur (1), **caractérisé en c e** que le système de commande des broches comprend un moyen convoyeur à convoyer le lubrifiant du système de commande des broches, qui consiste en une roue hélice (7) et est relié directement à ladite broche extérieure à arbre de transmission (2), de régime au-dedans du volume extérieur de lubrification (8) formé entre ladite broche à arbre de transmission (2) et ledit tube extérieur (1), aux palettes de ladite roue hélice étant configurée d'une telle façon, qu'elles soient actives en les deux sens de rotation et convoient ainsi le lubrifiant en directions différentes dans le volume extérieur de lubrification (8), selon le sens de rotation de ladite broche à arbre de transmission (2).

2. Système de commande des broches selon la revendication 1, **caractérisé en ce que** ledit volume extérieur de lubrification (8) s'ouvre, à sa partie inférieure, en un creux de broche (10) et **en ce que** ledit creux de broche (10) est en communication avec un volume intérieur de lubrification (9).

3. Système de commande des broches selon les revendications 1 et 2, **caractérisé en ce que**, quand ladite broche à arbre de transmission (2) est avancée, le lubrifiant est pressé en haut vers l'écrou (4) de broche à arbre de transmission, grâce à la forme de ladite roue hélice (7).

4. Système de commande des broches selon les revendications 1 et 2, **caractérisé en ce que**, quand ladite broche à arbre de transmission (2) est retirée, le lubrifiant est pressé en bas dans ledit creux de broche (10) et de là dans ledit volume intérieur de lubrification (9), grâce à la forme de ladite roue hélice (7).
